Europäisches Patentamt

European Patent Office

Office européen des brevets

(19)

(11) Publication number: **0 101 043**
A2

(12) **EUROPEAN PATENT APPLICATION**

(21) Application number: **83107822.5**

(22) Date of filing: **08.08.83**

(51) Int. Cl.³: **H 01 J 3/02**

(30) Priority: **09.08.82 US 406545**

(43) Date of publication of application:
**22.02.84 Bulletin 84/8**

(84) Designated Contracting States:
**AT BE CH DE FR GB IT LI LU NL SE**

(71) Applicant: **HELIONETICS, INC.**
**17312 Eastman Street**
**Irvine California(US)**

(72) Inventor: **Levatter, Jeffrey I.**
**2010 Woodmoss Court**
**Encinitas California(US)**

(74) Representative: **Baillie, lain Cameron et al,**
**c/o Ladas & Parry Isartorplatz 5**
**D-8000 München 2(DE)**

(54) Plasma cathode electron beam generating system.

(57) A method and apparatus for generating an electron beam using a new and improved plasma cathode system, the electron beam being suitable for use, by way of example, in large area pulsed x-ray devices of the type used for preionization of the discharge volume in certain lasers. The plasma cathode includes an electrically conductive member 12, 17 surrounded by an insulating sleeve 11 with an outer electrically conductive member 13, the first-mentioned member 12, 17 and a remote anode 16 being at ground potential, while the outer member 13 is maintained at a high negative potential relative to the first-mentioned member 12, 17 and the anode 16.

FIG. 3

-1-

# PLASMA CATHODE ELECTRON
# BEAM GENERATING SYSTEM

## BACKGROUND OF THE INVENTION

This invention relates generally to improvements in systems for generating electron beams and, more particularly, to a new and improved method and apparatus for generating an electron beam using a plasma cathode system and suitable for use in large area pulsed x-ray devices of the type used for preionization of the discharge volume in certain lasers, whereby greater reliability, increased current handling capability, higher repetition rates and longer cathode life may be readily obtained.

It is well known in the field of pulsed, high-pressure, discharge excited rare gas halide lasers and mercuric bromide lasers that x-ray sources have certain advantages for providing an extremely uniform preionization level throughout the discharge volume of such lasers. An adequate level and uniformity of preionization is one of the necessary conditions for obtaining stable, uniform glow discharge in high-pressure gas mixtures. Extreme uniformity in the predischarge electron density is particularly important when the discharge volume is large or when the discharge pulse duration is greater than 50 ns.

Whereas other ionizing sources such as ultraviolet (UV) sparks, and electron beams (e-beams) have been employed for conditioning laser gases, the x-ray technique has a number of well known features which makes this preionization method very attractive.

The x-ray generator used for preionization is also physically separated from the corrosive atmosphere in the laser chamber, in contrast to the various spark-type UV sources. A gradual deterioration, both in degree and uniformity, can be expected from a UV source in a corrosive atmosphere, resulting in increased danger of arcing. Furthermore, it is not necessary to employ a structurally fragile window foil, as commonly used with e-beam machines, to transmit the x-rays. The x-ray window can readily be made 1 to 3 mm. thick without severely attenuating the x-ray flux passing into the laser chamber. This avoids the lifetime problems of window foils associated with electron-beam ionization of gases.

As is well known in the x-ray arts, x-rays are generated by bombarding a high atomic weight material with high energy electrons. For large area, pulsed x-ray beams, a long life, high repetition rate, high energy electron beam source must be provided.

Electron sources with thermionic cathodes are widely used to produce small e-beams, but these are typically limited to current densities less than 100 ma. per/cm$^2$. Such thermionic cathodes also use excessive energy to satisfy their heating requirements and also require extensive vacuums better than $10^{-6}$ to $10^{-8}$ torr. Therefore, for short pulses and high current densities, high vacuum field-emission sources have proven to be more efficient and less delicate, and are generally preferred to thermionic cathode devices in high energy, pulsed gas laser systems.

The conventional field-emission gun cathode consists of one or more parallel metal blades made from thin tantalum or tungsten foil. The accelerating voltages applied between the cathode and the anode in such a system are generally several hundred kV. The resulting microfields at the tip of the cathode blade can become very large, producing high field-emission currents from submicron size whiskers at the surface of the cathode blade. There is so much joule heating in these surface whiskers that they vaporize explosively, and generate a layer of dense plasma, usually within nanoseconds, to envelope the entire cathode. The result is a plasma or virtual cathode, with essentially zero work function, and the electric field between the anode and the cathode draws the electrons out of the plasma to provide a broad electron beam source.

With a cold field-emission type cathode, there exists a definite threshold electric field below which the process does not generate a uniform plasma, with the result that the e-beam is non-uniform and non-reproducible. This situation usually develops after several thousand pulses when a conventional cathode blade is used in the gun. As the submicron whiskers are burned off from shot to shot, there eventually no longer remain enough high field-emission points on the edge of the cathode blade to support a uniform plasma formation. The e-beam thus becomes harder and harder to initiate, requiring increasingly higher voltages, and the current density becomes non-uniform.

In order to resolve the life problem of the conventional e-beam gun cathode, graphite or metal felt has been substituted for the metal blade, to provide a larger number of very sharp submicron whiskers and thereby enable a more uniform field-emission source. Unfortunately, even with such a felt cathode, the field-emission current decreases after several million shots and can only be restored by increasing the anode-cathode voltage. In this regard, the felt tip essentially burned off in such a way as to produce an electrostatically smooth profile which effectively reduced the field at the surface of the felt.

Hence, those concerned with the development and use of cold cathode e-beam sources for various purposes, such as the generation of x-rays for preionization applications and otherwise, have long recognized the need for improved systems capable of longer life, higher current density, and higher repetition rates over a wide range of operating voltages. The present invention clearly fulfills these needs.

## SUMMARY OF THE INVENTION

Briefly, and in general terms, the present invention provides a new and improved method and apparatus for generating a long life, high repetition rate, high current density electron beam of the type suitable for use in large area, pulsed x-ray systems and utilizing a new and improved plasma cathode device.

More specifically, and in a presently preferred embodiment, by way of example and not necessarily by way of limitation, the plasma cathode includes an electrically conductive core surrounded by an insulating sleeve with an outer electrically conductive winding around the sleeve. The cathode defined by the core, sleeve and winding is spaced from a remote anode in the form of a planar electrode. Both the anode and the cathode core are held at ground potential, while the outer winding around the dielectric sleeve is maintained at a high negative potential which is pulsed at a high repetition rate. Consequently, electrons are drawn from the plasma surrounding the cathode to the anode as a broad, high energy, pulsed e-beam which bombards the anode with high energy electrons.

The forward or back-scattered x-rays from the anode may be appropriately utilized for preionization of the discharge volume of a laser device, or may be utilized for any other purpose without departing from the spirit and scope of the invention.

The new and improved electron beam generation system provided by the plasma cathode structure of the present invention enables higher repetition rates, higher current densities and longer life than has heretofore been feasible with the systems of the prior art.

The above and other objects and advantages of this invention will be apparent from the following more detailed description, when taken in conjunction with the accompanying drawings of illustrative embodiments.

DESCRIPTION OF THE DRAWINGS

FIG. 1 is a partial, perspective view of a presently preferred embodiment of a plasma cathode constructed in accordance with the present invention;

FIG. 2 is a partial, longitudinal, sectional view through a plasma cathode constructed in accordance with the invention;

FIG. 3 is a schematic view illustrating the electrical circuit of a plasma cathode electron beam source in accordance with the invention; and

FIG. 4 is a sectional view, similar to FIG. 2, for an alternative embodiment of a plasma cathode in accordance with the invention.

DESCRIPTION OF THE PREFERRED EMBODIMENTS

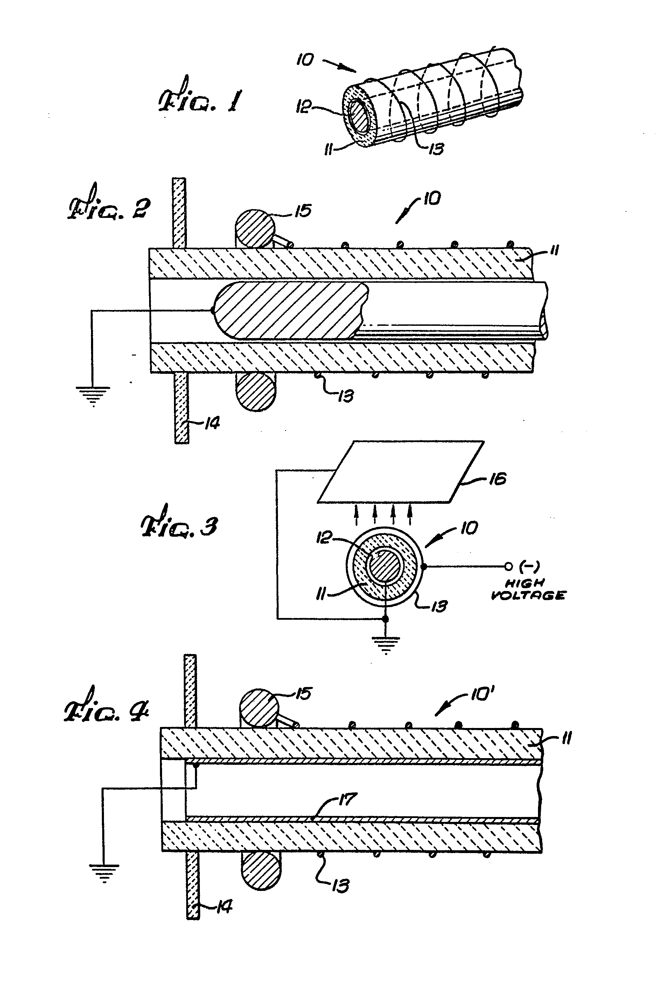

Referring now to the drawings, and particularly to FIGs. 1 and 2 thereof, there is shown a plasma cathode device 10 which includes an electrically insulating, cylindrical tube 11, of any suitable dielectric material, such as aluminum oxide, pyrex glass or any other suitable insulating material. Located within the dielectric tube 11 is an electrical conductor in the form of a solid metal rod or core 12. On the outer surface of the dielectric tube 11, electrically conductive wire of copper or the like is wrapped in the form of a spiral winding 13.

The metal core 12 is typically 1/4" in diameter, and the thickness of the dielectric tube 11 is selected in accordance with the voltage ultimately applied across the dielectric, to prevent breakdown of the dielectric material. The spacing between turns of the winding 13 may be anywhere from a fraction of a millimeter to approximately one centimeter.

As best observed in FIG. 2, which illustrates the left half of an otherwise symmetrical cathode structure, each end of the dielectric tube 11 includes a ceramic disc as an anti-tracking dielectric block 14 and is also provided with an electrically conductive field shaping ring 15 in electrical contact with each end of the winding 13 surrounding the outer surface of the dielectric tube 11. The field shaping ring is shown diagrammatically only and may take any shape desirable for shaping the electric field, the primary purpose of the ring being to avoid sharp edges and make the field in the region at the end of the tube 11 roll off very gradually, to prevent the induction of field-emission at the end of the tube which could otherwise electrically short-circuit the system.

Referring now more particularly to FIG. 3 of the drawings, an anode 16, of any appropriate x-ray target material, is provided in the form of a plane spaced from the cathode device 10. The anode 16 and electrically conductive cathode center core 12 are both connected to electrical ground potential. The outer winding 13 surrounding the dielectric tube 11 is connected to any suitable source of negative high voltage for pulse driving the system. The entire system consisting of the cathode device 10 and anode 16 is, of course, in a vacuum environment at $10^{-4}$ torr or less, which is a rather convenient and easily met vacuum requirement.

The system illustrated in FIG. 3 provides a very large electric field not only between the winding 13 and the anode 16, but also between the wire and the central rod 12. The dielectric tube 11 prevents electrical breakdown between the rod 12 and the winding 13, but very high electrical stresses are set up in the region of the wire 13 along the surface of the dielectric tube. As a result, local field-emission and ionization occurs which spreads over the outer surface of the dielectric tube 11 as a plasma layer filling in the spaces between the coils of the winding 13. Hence, an enhanced field-emission environment is provided without the need for submicron whiskers which would ultimately be eroded after several thousand electrical pulses driving the system.

Electrons are drawn from the plasma sheath surrounding the dielectric tube 11 to bombard the anode 16 with a broad beam of high energy electrons. The forward or backward-scattered x-rays emitted from the anode 16 may then be utilized for any appropriate purpose, such as a large area, pulsed x-ray beam source for preionizing the discharge volume of a laser.

The aforedescribed system has a life in excess of $10^8$ shots, and is capable of current densities from 100 ma. per $cm^2$ to above 5 amperes per $cm^2$, with an operating voltage range from 20 kV to greater than 100 kV, and at pulse frequencies ranging from single shot operation to greater than 200 pulses per second.

Referring now to FIG. 4 of the drawings, there is shown an alternative embodiment of the invention, wherein like reference numerals denote like or corresponding parts when compared with the cathode device 10 previously described in connection with FIG. 2. The primary difference between the cathode device 10´ of FIG. 4 and that shown in FIG. 2 resides in the substitution of an electrically conductive coating 17 (e.g., silver, nickel or the like) for the solid metal rod 12. In all other respects, the cathode device of FIG. 4 duplicates the structure previously described and performs in the same manner.

The aforedescribed plasma cathode electron beam generating system of the present invention satisfies a long existing need for improved electron beam sources capable of higher repetition rates, higher current densities and longer life.

It will be apparent from the foregoing that, while particular forms of the invention have been illustrated and described, various modifications can be made without departing from the spirit and scope of the invention. Accordingly, it is not intended that the invention be limited, except as by the appended claims.

-10-

CLAIMS

1.  A plasma cathode electron beam generating system, comprising:  an anode; a first electrically conductive member at least partially surrounded by a dielectric member; a second electrically conductive member positioned on the surface of said dielectric member and insulated from said first electrically conductive member; and means for maintaining said first electrically conductive member and said anode at one potential while maintaining said second electrically conductive member at a high negative potential with respect to said one potential.

2.  An electron beam generating system, as claimed in Claim 1, wherein said first electrically conductive member is a solid core electrode..

3.  An electron beam generating system, as claimed in Claim 1, wherein said first electrically conductive member is an electrically conductive coating on a surface of said dielectric member opposite that confronting said anode.

4.  An electron beam generating system, as claimed in Claims 1-3, wherein said second electrically conductive member is a wire disposed on a surface of said dielectric member.

5.  An electron beam generating system, as set forth in Claims 1-3, wherein said second electrically conductive member is an open wire array.

6.  An electron beam generating system, as set forth in Claims 1-3, wherein said anode has a planar surface confronting said second electrically conductive member and said dielectric member.

-11-

7. An electron beam generating system, as set forth in Claims 1-3, wherein said anode provides a target for generating x-rays when bombarded by high energy electrons drawn from a plasma generated along the surface of said dielectric member facing said anode.

8. An electron beam generating system, as set forth in Claims 1-3, wherein said dielectric member is a hollow cylinder surrounding said first electrically conductive member.

9. An electron beam generating system as claimed in Claims 1-3, wherein said anode and said first electrically conductive member are maintained at ground potential and said negative potential is pulsed with respect thereto.

10. A method of generating a long life, high repetition rate, high current density electron beam, comprising the steps of: insulating an electrically conductive wire array from a second electrically conductive member by means of an intervening electrically insulating medium, where at least portions of said wire array confront and are spaced from an anode electrode; and applying a pulsed, high negative electrical potential to said wire array relative to both said anode electrode and said second electrically conductive member to create a plasma adjacent said wire array and said insulating medium, whereby electrons are drawn from said plasma as a high energy, large area electron beam impinging upon said anode electron.

1/1

Fig. 1

10

12

11

13

Fig. 2

15

10

11

14

13

Fig. 3

16

12

10

11

13

(−)

HIGH VOLTAGE

Fig. 4

15

10'

11

17

14

13